# EUROPÄISCHE PATENTANMELDUNG

(11) **EP 1 767 302 A1**
(43) Veröffentlichungstag der Anmeldung: **28.03.2007**
(21) Anmeldenummer: 06019646.6
(22) Anmeldetag: 20.09.2006
(51) Int. Cl.: B23H 9/08

(54) **Verfahren zur endfertigen Bearbeitung einer Klinge eines Schneidwerkzeuges**

(30) Priorität: 21.09.2005 DE 102005044990
(71) Anmelder: ZWILLING J. A. Henckels Aktiengesellschaft, 42657 Solingen (DE)
(72) Erfinder: Droese, Dr. Joachim, 40764 Langenfeld (DE)
(74) Vertreter: Stenger, Watzke & Ring

(57) **Zusammenfassung**

Die Erfindung betrifft ein Verfahren zur endfertigen Bearbeitung einer Klinge (2) eines Schneidwerkzeuges, insbesondere eines Messers (1), bei dem die Schneide (6) der Klinge (2) durch mechanischen Materialabtrag, vorzugsweise Schleifen, geschärft und der dabei entstehende Grat anschließend entfernt wird. Um ein Verfahren der vorgenannten Art anzugeben, was es ermöglicht, den beim Schärfen der Klinge des Schneidwerkzeuges entstehenden Grat auf einfache Weise und reproduzierbar zu entfernen, wird mit der Erfindung vorgeschlagen, daß die Gratentfernung elektrolytisch erfolgt.

## Beschreibung

Die Erfindung betrifft ein Verfahren zur endfertigen Bearbeitung einer Klinge eines Schneidwerkzeuges, insbesondere eines Messers, bei dem die Schneide der Klinge durch mechanischen Materialabtrag, vorzugsweise Schleifen, geschärft und der dabei entstehende Grat anschließend entfernt wird. Des weiteren betrifft die Erfindung ein Schneidwerkzeug, insbesondere ein Messer mit einer Klinge und einer daran einendseitig angeordneten Handhabe.

Schneidwerkzeuge, insbesondere Messer, wie zum Beispiel Koch-, Säge-, Schinken-, Obst-, und Gemüsemesser werden mit dem letzten Fertigungsschritt geschärft, wodurch sie ihre Endschärfe erreichen. Dabei stellt die Schärfe ein wesentliches Qualitätsmerkmal eines Messers dar.

In der Regel findet die Schärfung eines Messers durch einen spanenden Prozeß statt, so zum Beispiel mittels Schleifen. Dabei kann der Schleifvorgang entweder vollautomatisch oder manuell durchgeführt werden. Durch den Schleifvorgang kommt es zu einem mechanischen Materialabtrag im Schneidenbereich der Klinge des Messers, was zur Ausbildung der eigentlichen Schneide, der sogenannten Wate führt.

Mit dem Schleifen geht in nachteiliger Weise eine Gratbildung einher, die sich für den späteren, bestimmungsgemäßen Gebrauch des Messers negativ auswirkt und deshalb unerwünscht ist. Diese Gratbildung ist dabei je nach Schärfverfahren unterschiedlich stark ausgeprägt. So weisen beispielsweise Brotmesser mit einer einseitig wellenförmig ausgebildeten Schneide oder solche Messer, die wechselseitig manuell bearbeitet werden, einen höheren Grat auf, als solche Messer, die auf beidseitig gleichzeitig arbeitenden Maschinen geschärft werden.

Aus dem Stand der Technik ist es bekannt, den sich infolge eines Schärfprozesses ausbildenden, unerwünschten Grat durch einen den Schärfprozeß nachfolgenden Arbeitsgang mechanisch zu entfernen, so zum Beispiel durch Bürsten oder Polieren. Die mechanische Nachbehandlung zieht allerdings verschiedene Nachteile mit sich, insbesondere dann, wenn sie manuell erfolgt.

So unterliegt ein manueller Bürsten- oder Poliervorgang starken Qualitätsschwankungen. Es besteht im besonderen die Gefahr, die Schneide durch zu langes Bürsten oder Polieren zu verrunden und somit abzustumpfen. Damit hängt die Qualität der Bearbeitung, das heißt die Endschärfe des Messers im wesentlichen von der Erfahrung desjenigen ab, der den Bürsten- oder Poliervorgang durchführt. Schwankungen in der Bearbeitungsqualität sind in nachteiliger Weise die Folge, so daß reproduzierbare Ergebnisse nicht erzielt werden können.

Ausgehend vom vorbeschriebenen Stand der Technik ist es die **Aufgabe** der Erfindung, ein Verfahren zur endfertigen Bearbeitung einer Klinge eines Schneidwerkzeuges, insbesondere eines Messers, anzugeben, welches unter Vermeidung der vorgenannten Nachteile ermöglicht, den beim Schärfen der Klinge des Schneidwerkzeuges entstehenden Grat auf einfache Weise und reproduzierbar zu entfernen. Zudem soll mit der Erfindung ein neuartiges Schneidwerkzeug, insbesondere Messer, vorgeschlagen werden.

Verfahrensseitig wird zur **Lösung** dieser Aufgabe vorgeschlagen, daß die Gratentfernung elektolytisch erfolgt.

Mit der Erfindung wird also vorgeschlagen, die endfertige Bearbeitung eines Schneidwerkzeuges zur Entfernung des beim Schärfen der Klinge des Schneidwerkzeuges entstehenden Grat nicht mechanisch, also zum Beispiel durch Bürsten oder Polieren, sondern elektrolytisch durchzuführen. Der die Endschärfe eines Schneidwerkzeuges in nachteiliger Weise beeinflussende und deshalb unerwünschte Grat wird erfindungsgemäß in einem elektrolytischen Entgratungsvorgang entfernt, ohne daß die Scharfkantigkeit der Schneide, der sogenannten Wate, leidet. Die elektrolytische Entgratung ist in vorteilhafter Weise von manuellen Einflüssen entkoppelt, so daß reproduzierbare Ergebnisse hoher Qualität erzielt werden können. Gerade in der Massenfertigung läßt sich so die Qualitätsstreuung stark reduzieren.

Der elektrolytische Entgratungsvorgang wird zur Erzielung reproduzierbarer Ergebnisse vorzugsweise zeitgesteuert, was in vorteilhafter Weise Automatisierungspotential schafft.

Erfindungsgemäß wird die Klinge für eine vorgebbare Zeitdauer in einen Elektrolyten vollständig oder teilweise eingetaucht, und zwar derart, daß zumindest die Wate vollständig mit dem Elektrolyten in Kontakt kommt. Im Elektrolyten findet dann die elektrolytische Behandlung der Messerklinge statt. Die Tauchzeit wird dabei so bemessen, daß es zu einer vollständigen Entfernung des an der Messeklinge anhaftenden Grat kommt, ein Verrunden oder Abstumpfen der Wate durch eine zu lange Kontaktzeit der Messerklinge mit dem Elektrolyten aber vermieden wird. Um dieses Ziel zu erreichen, wird mit der Erfindung vorgeschlagen, daß die Tauchdauer, das heißt die Zeit, in der die Messerklinge mit dem Elektrolyten in Kontakt steht, in Abhängigkeit der Elektrolyt-Zusammensetzung und/oder des angelegten Stroms gesteuert wird. Auf diese Weise lassen sich optimierte Ergebnisse erreichen.

Gemäß einer ersten Alternative des Verfahrens wird nur der Schneidenbereich der Messerklinge in den Elektrolyten eingetaucht, so daß nur die Wate mit dem Elektrolyten in Kontakt kommt. Gemäß dieser Verfahrensdurchführung findet eine elektrolytische Behandlung also nur des Schneidenbereiches statt. Die übrigen Bereiche der Klinge, das heißt die Klingenseiten und der Klingenrücken bleiben elektrolytisch unbehandelt. Dies hat Vorteile gerade im Erlbereich, da das das Messer tragende Gestell dann nicht in den Elektrolyten, d.h. das Bad eintauchen muß. Aus diesem Grunde ist die erste Verfahrensalternative bevorzugt.

In einer zweiten Alternative des Verfahrens wird die gesamte Klinge vollständig in den Elektrolyten eingetaucht. Um zu verhindern, daß außer dem Schneidenbereich andere Bereiche der Klinge mit dem Elektrolyten in Kontakt kommen und von diesem angegriffen werden, ist es gemäß einem weiteren Merkmal der Erfindung vorgesehen, die wunschgemäß nicht elektrolytisch zu behandelnden Bereiche der Klinge mit einem das Klingenmaterial vor einem Kontakt mit dem Elektrolyten schützenden Überzug zu versehen. Ein solcher Überzug kann beispielsweise in Form einer Folie ausgebildet sein, der auf die vor dem Elektrolyten zu schützenden Klingenbereiche aufgeklebt wird. Nach Beendigung der elektrolytischen Behandlung kann diese Folie rückstandsfrei vom Klingenkörper wieder entfernt werden. Anstelle einer Folie kann als Überzug auch ein Lack genutzt werden, der auf die vor dem Elektrolyten zu schützenden Klingenbereiche aufgesprüht wird.

Bis auf den Schneidenbereich wird die gesamte Klinge vorzugsweise mit einem das Klingenmaterial vor einem Kontakt mit dem Elektrolyten schützenden Überzug versehen, so daß nur der Schneidenbereich, der sogenannte Watenbereich, vom Elektrolyten angegriffen werden kann. Denn ansonsten werden neben der Gratentfernung auch die Spitzen der Schleifriefen durch die elektrolytische Behandlung eingeglättet, so daß die Klingenblattoberfläche einen Glanz erhält, der sich von der gepliesten und/oder geschliffenen Struktur abhebt. Zur Hervorhebung der nach dem erfindungsgemäßen Verfahren speziell behandelten Wate ist dieser Effekt willkommen, für die gesamte Oberfläche der Klinge allerdings nicht, weil die geplieste und/oder geschliffene Oberfläche der Klinge ein Qualitätsmerkmal darstellt.

Als Überzug haben sich speziell angepaßte Deckfolien als vorteilhaft herausgestellt, die so aufgebaut sind, daß keine Elektrolytflüssigkeit hinter die Folie gelangen kann, die Folie allerdings nach dem elektrolytischen Behandlungsprozeß rückstandslos wieder entfernt werden kann. Durch das Abdecken der nicht elektrolytisch zu behandelnden Bereiche der Klinge wird in vorteilhafter Weise eine im äquidistanten Abstand zur Wate verlaufende, klare Sichtlinie ausgebildet, die die nach dem erfindungsgemäßen Verfahren entgratete Wate optisch hervorhebt. Im Zuge der elektrolytischen Behandlung erhalten die behandelten Bereiche der Klinge eine geglänzte Oberfläche. Diese geglänzte Oberfläche setzt sich gegenüber den nicht behandelten Bereichen der Klinge optisch ab, denn die nicht behandelten Bereiche weisen aufgrund ihrer dort belassenen Schleifenriefen eine matt glänzende Oberfläche auf.

Durch die Abdecktechnologie, das heißt das Aufbringen eines Überzuges auf diejenigen Bereiche der Klinge, die elektrolytisch nicht behandelt werden sollen, können auch gebogene Waten, wie zum Beispiel bei einem Koch- oder Chefmesser, gleichfalls mit einer im äquidistanten Abstand zur Wate verlaufenden, gebogenen Glanzkante erzeugt werden.

Die feinen Späne, aus denen der zu entfernende Grat besteht, weisen gegenüber der Klingenschneide ein geringeres Volumen auf, so daß hier der Abtragprozeß im Zuge der elektrolytischen Behandlung vorrangig stattfindet, was zu einem Entfernen der Späne, das heißt des Grat führt. Voraussetzung ist jedoch, daß ein Mindestvolumen an Grat vorhanden ist, um den Stromfluß zu gewährleisten. Aus diesem Grunde nimmt die Gefahr, daß durch zu lange Zykluszeiten die Wate angegriffen bzw. verrundet wird, mit abnehmender Menge an Grat, der beim Schärfungsprozeß entsteht, zu. Aus diesem Grunde wird mit der Erfindung vorgeschlagen, den elektrolytischen Behandlungsprozeß auch in Abhängigkeit der Menge an zu entfernendem Grat zu steuern, so daß auch verhältnismäßig glatte Waten, also solche Waten, an denen nur eine geringe Menge an zu entfernendem Grat anhaftet, mit dem erfindungsgemäßen Verfahren behandelt und vom unerwünschten Grat ohne störende Einflußnahme auf die Wate entfernt werden können. Damit eignet sich das erfindungsgemäße Verfahren auch zur Nachbehandlung, das heißt zur Gratentfernung von vollautomatisch geschliffenen Messerklingen.

Das erfindungsgemäße Verfahren kann entweder anodisch oder kathodisch betrieben werden, das heißt das zu entgratende Schneidwerkzeug wird entweder mit dem Minus- (kathodische Entgratung) oder dem Pluspol der Stromquelle (anodische Entgratung) verbunden. Eine kombinierte, kathodische-anodische Entgratung ist gleichfalls möglich.

Eine anodische Entgratung ist in der Regel vorzuziehen, da sie wegen des geringeren Materialangriffs insofern wirkungsvoller ist, als daß der schädliche Grat wunschgemäß entfernt wird, ohne daß es zu einem Angriff auf das Klingenmaterial kommt, was bei zu langer Verweildauer des Schneidwerkzeuges im Elektrolyten zu einer Abrundung oder Abstumpfung der Wate führen könnte. Die anodische Entgratung hat gegenüber der kathodischen Entgratung eine bessere Aktivierungswirkung, so daß die anodische Entgratung der kathodischen Entgratung vorzuziehen ist. Bei einer kombinierten kathodischen-anodischen Entgratung sollte die Entgratung stets mit einer anodischen Behandlung abgeschlossen werden, um die Vorteile der besseren Aktivierungswirkung bei der anodischen Entgratung auszunutzen.

Ob die elektrolytische Behandlung anodisch, kathodisch oder kombiniert kathodisch und anodisch durchgeführt wird, hängt in erster Linie von dem Material der Klinge ab. Dabei hat sich insbesondere bei Eisenwerkstoffen eine anodische Entgratung als vorteilhaft herausgestellt.

Vorrichtungsseitig wird zur **Lösung** der vorgenannten Aufgabe vorgeschlagen ein Schneidwerkzeug, insbesondere Messer, mit einer Klinge und einer daran einendseitig angeordneten Handhabe, welches Schneidwerkzeug dadurch gekennzeichnet ist, daß die Schneide der Klinge elektrolytisch entgratet ist.

Die Vorteile einer elektrolytischen Entgratung gegenüber einer mechanischen Entgratung, wie zum Beispiel Bürsten oder Polieren, ergeben sich aus dem bereits vorerläuterten Verfahren. Die elektrolytisch behandelten Bereiche der Klinge weisen in vorteilhafter Weise eine geglänzte Oberfläche auf, so daß eine nach dem erfindungsgemäßen Verfahren behandelte Klinge einen von den übrigen Klingenbereichen optisch unterscheidbaren Schneidenbereich aufweist.

Die Schneidwerkzeugklinge besteht vorzugsweise aus einem nicht rostenden Stahl oder einer nicht rostenden Stahllegierung, wie zum Beispiel X20Cr13.

Mit der Erfindung wird des weiteren ein Elektrolyt zur Durchführung des Verfahrens vorgeschlagen, der durch eine cyanfreie Zusammensetzung auf Basis eines Phosphorsäure-Schwefelsäure-Gemisches gekennzeichnet ist. Die Elektrolytzusammensetzung kann des weiteren Salpetersäure und/oder Essigsäure und/oder Chromsäure beinhalten.

Weitere Merkmale und Vorteile der Erfindung ergeben sich aus der nachfolgenden Beschreibung anhand der Fign. Dabei zeigen:
- Fig. 1: in einer Seitenansicht ein nach dem erfindungsgemäßen Verfahren behandeltes Schneidwerkzeug in Form eines Messers und
- Fig. 2: in einer schematischen Darstellung die erfindungsgemäße Verfahrensdurchführung.

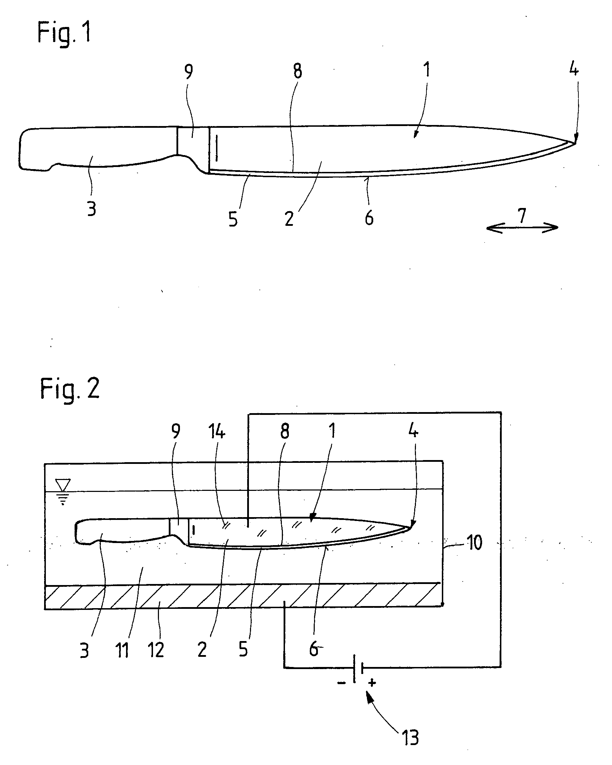

Fig. 1 zeigt in einer Seitenansicht ein nach dem erfindungsgemäßen Verfahren behandeltes Schneidwerkzeug in Form eines Messers 1. Das Messer 1 besteht aus einer Klinge 2 sowie einer daran einendseitig angeordnete Handhabe in Form eines Griffstücks. Die Klinge 2 geht handhabenseitig in einen Kropf 9 über, an den sich die Handhabe 3 anschließt. Der Handhabe 3 gegenüberliegend trägt die Klinge 2 eine Klingenspitze 4.

Mit Bezug auf die Blattebene nach Fig. 1 ist die untere Kante der Klinge 2 als Schneide 6, das heißt als sogenannte Wate ausgebildet, die in Längsrichtung 7 ausgehend vom Kropf 9 bis zur Klingenspitze verläuft. Die im Schneidenbereich 5 verlaufende Schneide 6 ist durch eine Sichtkante 8 vom übrigen Klingenbereich optisch abgesetzt. Diese Sichtkante 8 entsteht dadurch, daß der Schneidenbereich 5 nach dem erfindungsgemäßen Verfahren behandelt ist und eine geglänzte Oberfläche aufweist. Die übrigen Bereiche der Klinge 2 sind elektrolytisch unbehandelt und weisen eine durch Schleifriefen bedingte, matt glänzende Oberfläche auf. Die Sichtkante 8 grenzt den Schneidenbereich 5 mit seiner geglänzten Oberfläche von den übrigen Klingenbereichen, die matt glänzend sind, ab.

Das in Fig. 1 gezeigte Messer 1 wurde unter Anwendung des erfindungsgemäßen Verfahrens elektrolytisch entgratet. Die Verfahrensdurchführung ist schematisch in Fig. 2 dargestellt.

Wie Fig. 2 erkennen läßt, wird das zu entgratende Messer 1 in einen in einem Behälter 10 befindlichen Elektrolyten 11 vollständig eingetaucht. Der Elektrolyt ist vorzugsweise cyanfrei und auf Basis eines Phosphorsäure-Schwefelsäure-Gemisches gebildet. Eine nur teilweise Eintauchung des Messers 1 bei der nur die Wate des Messers 1 mit dem Elektrolyten in Kontakt gebracht wird, ist allerdings bevorzugt.

Die elektrolytische Behandlung erfolgt anodisch, zu welchem Zweck das zu entgratende Messer 1 anodisch geschaltet, das heißt an den Pluspol der Stromquelle 13 angeschlossen ist. Die auf Minus geschaltete Kathode 12 ist im Ausführungsbeispiel nach Fig. 2 bodenseitig des Behälters 10 angeordnet. Eine andere Ausgestaltung der Kathode 12 ist selbstredend denkbar.

Bis auf den Schneidenbereich 5 ist die Klinge 2 des in Fig. 2 gezeigten Messers 1 mit einem Überzug 14 in Form einer selbstklebenden Folie abgedeckt. Der Überzug 14 verhindert, daß der Elektrolyt mit außerhalb des Schneidenbereichs 5 liegenden Bereichen der Klinge 2 in Kontakt kommen und diese angreifen kann. Eine elektrolytische Behandlung findet mithin lediglich im Schneidenbereich 5 der Klinge 2 statt.

Infolge der elektrolytischen Behandlung wird der sich im Schneidenbereich 5 befindliche Grat, der infolge eines vorangegangenen Schleifprozesses zum Zwecke der Schärfung des Messers 1 entstanden ist, entfernt. Da das zu entgratende Messer 1 als Anode geschaltet ist, kann der elektrolytische Vorgang der Entgratung als anodische Entgratung bezeichnet werden.

Wie aus Fig. 2 ersichtlich ist, ist der die nicht elektrolytisch zu behandelnden Bereiche der Klinge 2 abdeckende Überzug 14 schneidenseitig derart ausgebildet, daß die schneidenseitige Randkante des Überzugs 14 in einem äquidistanten Abstand zur Schneide 6 verläuft. Aufgrund dieser Ausgestaltung verfügt das endfertig behandelte Messer 1 über die schon zuvor anhand von Fig. 1 beschriebene Sichtkante 8, die dadurch entsteht, daß nur der nicht abgedeckte Schneidenbereich 5 der Klinge 2 einer elektrolytischen Behandlung unterzogen wird und im Unterschied zu den übrigen Bereichen der Klinge 2 eine geglänzte Oberfläche aufweist.

Mögliche Verfahrensparameter zur Durchführung des erfindungsgemäßen Verfahrens seien beispielhaft wie folgt genannt:

Der Elektrolyt besteht aus einem Gemisch von konzentrierter Schwefelsäure und konzentrierter Phosphorsäure bei einer Badtemperatur von 70°C. Der Behandlungszyklus beträgt je nach Messergröße zwischen einer und fünf Minuten. Die Stromstärke betraägt 60A bei anodischem Betrieb.

### Bezugszeichenliste

- 1: Messer
- 2: Klinge
- 3: Handhabe (Griffstück)
- 4: Klingenspitze
- 5: Schneidenbereich
- 6: Schneide (Wate)
- 7: Längsrichtung
- 8: Sichtkante
- 9: Kropf
- 10: Behälter
- 11: Elektrolyt
- 12: Kathode
- 13: Stromquelle
- 14: Überzug

## Patentansprüche

1. Verfahren zur endfertigen Bearbeitung einer Klinge (2) eines Schneidwerkzeuges, insbesondere eines Messers (1), bei dem die Schneide (6) der Klinge (2) durch mechanischen Materialabtrag, vorzugsweise Schleifen, geschärft und der dabei entstehende Grat anschließend entfernt wird,
**dadurch gekennzeichnet,**
**daß** die Gratentfernung elektrolytisch erfolgt.

2. Verfahren nach Anspruch 1, **dadurch gekennzeichnet, daß** die Schneide (6) anodisch entgratet wird.

3. Verfahren nach Anspruch 1, **dadurch gekennzeichnet, daß** die Schneide (6) kathodisch entgratet wird.

4. Verfahren nach einem der vorhergehenden Ansprüche 1 bis 3, **dadurch gekennzeichnet, daß** die Schneide (6) einer kombinierten, kathodischen-anodischen Entgratung unterzogen wird, wobei die Entgratung mit einer anodischen Behandlung abgeschlossen wird.

5. Verfahren nach einem der vorhergehenden Ansprüche 1 bis 4, **dadurch gekennzeichnet, daß** die Klinge (2) für eine vorgebbare Zeitdauer in einen Elektrolyten (11) vollständig oder teilweise eingetaucht wird.

6. Verfahren nach Anspruch 5, **dadurch gekennzeichnet, daß** die Tauchdauer in Abhängigkeit der Elektrolytzusammensetzung und/oder des angelegten Stroms gesteuert wird.

7. Verfahren nach einem der vorhergehenden Ansprüche, **dadurch gekennzeichnet, daß** Bereiche der Klinge (2) mit einem das Klingenmaterial vor einem Kontakt mit dem Elektrolyten schützenden Überzug (14) versehen werden.

8. Verfahren nach Anspruch 7, **dadurch gekennzeichnet, daß** als Überzug (14) eine Folie auf die vor dem Elektrolyten zu schützenden Klingenbereiche aufgeklebt wird.

9. Verfahren nach Anspruch 7, **dadurch gekennzeichnet, daß** als Überzug (14) ein Lack auf die vor dem Elektrolyten zu schützenden Klingenbereichen aufgesprüht wird.

10. Schneidwerkzeug, insbesondere Messer (1), mit einer Klinge (2) und einer daran einendseitig angeordneten Handhabe (3), **dadurch gekennzeichnet, daß** die Schneide (6) der Klinge (2) elektrolytisch entgratet ist.

11. Schneidwerkzeug nach Anspruch 10, **dadurch gekennzeichnet, daß** die Klinge (2) aus einem nicht rostenden Stahl oder einer nicht rostenden Stahllegierung besteht.

12. Schneidwerkzeug nach Anspruch 10 oder 11, **dadurch gekennzeichnet, daß** die elektrolytisch behandelten Bereiche der Klinge (2) eine geglänzte Oberfläche aufweisen.

13. Elektrolyt zur Durchführung des Verfahrens nach einem der vorhergehenden Ansprüche 1 bis 9, **gekennzeichnet durch** eine cyanfreie Zusammensetzung auf Basis eines Phosphorsäure-Schwefelsäure-Gemisches.

14. Elektrolyt nach Anspruch 13, **dadurch gekennzeichnet, daß** die Zusammensetzung des weiteren Salpetersäure und/oder Essigsäure und/oder Chromsäure beinhaltet.
